**Europäisches Patentamt**

**European Patent Office**

**Office européen des brevets**

(19)

(11) Publication number: **0 016 936**
**A1**

## (12) EUROPEAN PATENT APPLICATION

(21) Application number: **80100611.5**

(22) Date of filing: **06.02.80**

(51) Int. Cl.³: **B 65 G 53/60**

(30) Priority: **23.03.79 CA 324044**

(43) Date of publication of application: **15.10.80**
**Bulletin 80/21**

(84) Designated Contracting States: **AT BE CH DE FR GB IT
LU NL SE**

(71) Applicant: **Atlantic Bridge Company Limited, P.O.
Box 1120, Lunenburg, Nova Scotia BOJ 2CO (CA)**

(72) Inventor: **Dick, James M.R., R.R.2, Mahone Bay, Nova
Scotia BOJ 2EO (CA)**
Inventor: **Chouinard, Joseph R.C., R.R.2, Pleasantville,
Nova Scotia BOR 1GO (CA)**
Inventor: **Holbrook, George W., Tantallon, Halifax
County, Nova Scotia BOJ 3JO (CA)**

(74) Representative: **Baillie, Iain C. et al, c/o Langner Parry
Blumenstrasse 48, D-8000 München 2 (DE)**

(54) **Air unloader for fish.**

(57) Apparatus for conveying and handling delicate articles such as fish includes an elongated inlet duct adapted to extend into an article storage region, such as the hold of a ship. The suction producing means (40) provides for a flow of air through the elongated inlet duct at a velocity sufficient to entrain the articles in the air flow and to carry same through the inlet duct. A separating means is interposed between the suction producing means (40) and the inlet duct for receiving articles passing through the inlet duct and for separating such articles from the air flow. The separating means includes a hollow chamber (32) of generally circular cross-section defining a generally upright axis of symmetry, such chamber (32) having an air inlet channel (58) connected to the inlet duct and an air outlet channel (52) connected to the suction producing means (40) whereby the latter maintains a sub-atmospheric pressure in the chamber (32). Inlet channel (58) and outlet channel (52) are generally tangentially disposed with respect to the circumference of the chamber (32) so that air entering the chamber (32) via the inlet channel (58) moves in a rotational pattern around the chamber axis and thence outwardly of the outlet channel (52) without reversing its direction of rotation. Articles entrained in the entering flow are guided around the chamber axis by the interior wall of the chamber (32) and move downwardly within the chamber (32) in a spiral path under the influence of gravitational forces thereon.

ACTORUM AG

AIR UNLOADER FOR FISH

BACKGROUND OF THE INVENTION

This invention relates in general to the handling of articles and, in particular, to improvements in apparatus for conveying and handling somewhat delicate articles, such as fresh sea products, by means of air flow.

The handling of certain sea products, particularly the softer fleshed variety of fish, presents problems not found in the conveyance of other relatively tough sea products, such as certain shell fish, in that the softer flesh fish are quite easily damaged by rough handling to the point where a large proportion can be used only for low-grade fillet packs or by-products such as fish meal or fish oil. Obviously it is desirable to keep the number of damaged fish to a minimum from the profit point of view.

The unloading of fish rapidly from the hold of a ship, with a minimum of effort, and with little damage to the fish presents a problem which has not as yet been solved in an entirely satisfactory fashion. While a number of pneumatic conveyance devices have met with a certain degree of success insofar as speed and utilization of manpower are concerned, it has been found that such devices, in general, tend to cause far too much damage to certain of the more delicate species of fish.

An earlier form of pneumatic conveyance device is illustrated in Canadian Patent No. 756,474 issued April 11, 1967. The patent states that this device is capable of withdrawing sea products, such as shrimp, from the hold of a ship by passing the shrimp through an elongated hose while entrained in a stream of air and thence into a chamber within which is maintained a partial vacuum. The lower portion of the chamber enters into a reservoir which contains water. After the shrimp enter the chamber at high velocity they strike the surface of the water in the reservoir at substantially right angles thereto whereby they are very quickly decelerated to almost zero velocity. The shrimp then settle below the surface of the water and come to rest upon a conveyor belt which carries the shrimp outwardly of the reservoir and deposits same at some location e.g. on an unloading dock. While this apparatus has been successful in conveying certain of the firmer fleshed varieties of fish, such as red fish, it has not been widely accepted in the industry mainly due to the fact that it causes undue damage to most kinds of softer fleshed fish with damage rates often running in the order of 50% (i.e. damage is often caused to approximately 50% of the catch). A large portion of the damage appears to occur at the moment of impact of the fish with the surface of the water in the reservoir. Much of the damage was apparently caused by the fish striking the water at right angles at high velocity which apparently resulted in bruising, breaking and tearing of the flesh of these fish.

Canadian Patent No. 867,649 issued April 6, 1971 to D. A. Eisenhauer discloses an apparatus designed to alleviate certain of the problems associated with the structure described in the earlier Canadian patent 756,474. The Eisenhauer apparatus includes a vortex or cyclone chamber which receives the articles after they have passed through the elongated passageway with the articles then spiralling downwardly within the cyclone chamber under the influence of the swirling air stream and the gravitational forces thereon. The lower end of the chamber was provided with a downwardly inclined wall portion adapted to guide the articles into the liquid bath at a shallow angle thereby to lessen the shock of impact of the fish with the water surface.

While the Eisenhauer development was found to represent a very substantial improvement over previously existing devices, the amount of damage to the softer fleshed fish varieties was still sufficient to give rise to concern. Various studies were carried out which indicated very strongly that much of the damage was caused by virtue of the relatively high air velocities existing within the vortex chamber.

The cyclone chamber employed by the Eisenhauer development was of a more or less conventional variety employing a tangential inlet and a vortex finder-type of outlet disposed at the top center of the cyclone chamber. This vortex finder was connected to a suction fan capable of maintaining the air pressure within the chamber below atmospheric level by an amount approximating about 20 inches of water. By virtue of this arrangement, a free vortex action was set up within the cyclone chamber which, in turn, produced excessively high swirl velocities within the chamber and at values greater than the conveying float velocities acceptable for fish. The high speed air tended to impart unwanted accelerations to the moving fish thus causing damage to same. Additionally, the change in direction of the air within the vortex chamber, i.e. its reversal in direction of movement before passing out of the vortex finder, represents a loss of energy in the system resulting in an increased demand for power in the suction system. Another problem with the classical cyclone chamber arrangement is that there is a great deal of turbulence with particle activity being unacceptably high. Lighter particles remain in motion and do not gravitate out. Heavier particles which progress to the bottom of the cyclone are in violent motion until discharged. There tends to be an excessive carry-over of fine particles through the conduit leading to the suction fan.

SUMMARY OF THE INVENTION

It is a general object of the present invention to provide apparatus capable of alleviating the difficulties noted above and which is capable of conveying and handling articles such as fish in a rapid and economical manner and wherein provision is made to effect a substantial reduction in the amount of damage done to the more delicate articles, e.g. the softer fleshed fish, as compared with the known prior art devices. While the invention relates particularly to the handling of sea products such as fish, it is contemplated that the invention would be useful in the handling of other semi-delicate products as well, e.g. certain vegetable and fruit products.

Apparatus for conveying and handling delicate articles such as fish, in accordance with the present invention, includes an elongated inlet duct adapted to extend into an article storage region, such as the hold of a ship. The suction producing means provides for a flow of air through the elongated inlet duct at a velocity sufficient to entrain the articles in the air flow and to carry same through the inlet duct. A separating means is interposed between the suction producing means and the inlet duct for receiving articles passing through the inlet duct and for separating such articles from the air flow. The separating means includes a hollow chamber of generally circular cross-section defining a generally upright axis of symmetry, such chamber having an air inlet channel connected to the inlet duct and an air outlet channel connected to the suction producing means whereby the latter maintains a sub-atmospheric pressure in the chamber.

In accordance with the invention both the inlet channel and the outlet channel are generally tangentially disposed with respect to the circumference of the chamber so that air entering the chamber via the inlet channel moves in a rotational pattern around the chamber axis and thence outwardly of the outlet channel without reversing its direction of rotation. Articles entrained in the entering flow are guided around the chamber axis by the interior wall of the chamber and move downwardly within the chamber in a spiral path under the influence of gravitational forces thereon.

By providing for a tangential outlet of air from the separating chamber, the free vortex action is eliminated thus reducing very substantially the maximum velocities encountered within the chamber thus reducing greatly the amount of damage done to the delicate articles as well as reducing the amount of energy required to operate the system.

In a further feature of the invention, said outlet channel is disposed at a level above the level of the inlet channel. This serves to reduce the amount of particle carry-over from the inlet to the outlet. Preferably, the above-noted chamber is defined by a plurality of wall sections, with the outlet channel being connected to a wall section which has a diameter less than the diameter of the wall section to which the inlet channel is connected. This arrangement serves to substantially reduce carry-over of solids from the inlet channel to the outlet channel.

In the preferred form of the invention the chamber includes a conical wall section in a lower portion of same, the diameter of the conical section decreasing in the downward direction with the lower end of the chamber defining an exit way for the articles and a liquid trap arrangement being associated with the lower end of the chamber to allow the articles to exit the chamber while the trap prevents entry of air into the chamber. In a preferred embodiment of the invention the trap arrangement includes a water tank with a belt conveyor being disposed therein, upon the upper surface of which belt the articles settle after exiting from the lower end of the chamber, the belt conveyor being adapted to carry the articles upwardly out of the water tank.

Preferably the exit way for the articles includes a tubular throat section disposed below the conical wall section and arranged such that it is located in the liquid of the liquid trap. The tubular throat section is shallowly flared outwardly in the downward direction to reduce blockages caused by buildups of any ice which may be carried through into the separating chamber along with the articles.

As a further feature, the generally tangential disposed inlet channel includes a surface portion arranged to impart a degree of radial velocity to the articles relative to the axis of the chamber before such articles enter into the chamber; this lessens the shock of contact between the articles and the interior of the chamber after entry.

0016936

DESCRIPTION OF THE VIEWS OF DRAWINGS

Embodiments of the invention will now be described, by way of example, reference being had to the annexed drawings in which:

FIGS. 1 and 2 are plan and elevation views of a typical prior art vortex chamber employing a central vortex finder;

FIGS. 3 and 4 are plan and side elevation views respectively of a separating chamber incorporating tangentially arranged inlet and outlet channels in accordance with the present invention;

FIGS. 5 and 6 are plan and side elevation views respectively of a modified form of separating chamber in accordance with the invention;

FIG. 7 illustrates graphically the air velocities in a separator having a tangential outlet as compared with a similar separator having a top center air extraction and using the same air flow in cfm in each case;

FIG. 8 is a vertical section through a separator having a tangential air extraction (a central vortex finder being illustrated in phantom) and showing reference planes A and B as referred to in FIG. 7;

FIG. 9 is a side elevation view of a fish unloading apparatus incorporating the principles of the present invention;

FIG. 10 is a plan view of the apparatus shown in FIG. 9;

FIG. 11 is an end elevation view of the apparatus of FIG. 9

FIGS. 12, 13 and 14 are two elevation views at right angles to one another and a plan view respectively of the separating chamber per se as employed in the apparatus of FIGS. 9 - 11.

DETAILED DESCRIPTION

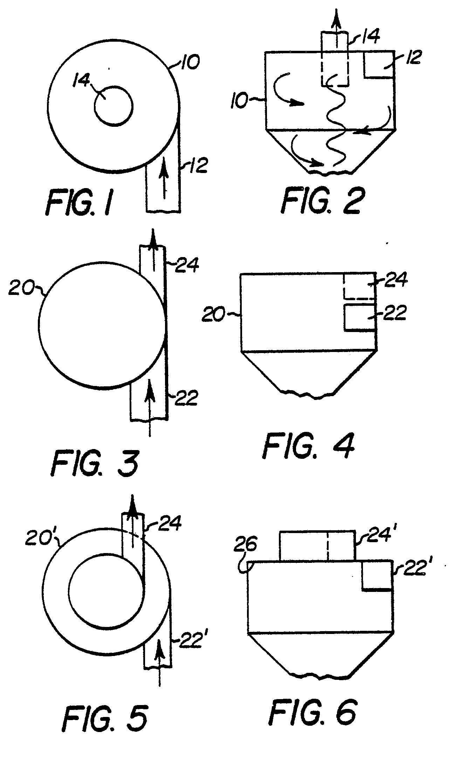

With reference to FIGS. 1 and 2 there is shown in diagrammatic form a portion of a classical vortex chamber 10 having a tangentially arranged inlet channel 12 and a centrally located air extraction pipe 14 communicating with a vortex finder which extends downwardly into the interior of the cyclone chamber. This classical arrangement sets up a high velocity vortex within the chamber and, when used in conjunction with the handling of delicate articles, such high velocites can give rise to substantial damage rates, as previously described, as well as calling for the use of relatively large amounts of energy to operate the system in view of the pressure losses occurring between the entrance and the exit from the chamber.

FIG. 3 shows in plan a hollow chamber of circular cross-section designated by reference 20, such chamber 20 having an inlet channel 22 which is tangential to the circumference of the chamber and an outlet channel 24 which is also tangential to the chamber circumference with such outlet channel 24 being located at a level above the level of the inlet channel 22. This difference in elevation between the inlet and exit channels is more clearly seen in the elevation view of FIG. 4. By using the separating chamber illustrated in FIGS. 3 and 4, the air moves in a circular pattern around the axis of the chamber and there is no abrupt change in direction of the air stream between entry and exit. As a result turbulence is at a minimum and no significant vortex is created in the lower part of the chamber. It has been found that while particles of significant size, such as whole fish, will travel or spiral downwardly along the walls of the chamber, small particles, such as fish fragments, may continue to travel around the top of the chamber and pass into the suction system via exit channel 24. The following quantitative improvements were measured for this case taking values recorded for the device shown in FIGS. 1 and 2 as a basis at 100%:

Reduction in average air velocity within receiver - 85%;

Reduction in small particle carry-over to fan - 23%;

Reduction in pressure loss through receiver-98%.

FIGS. 5 and 6 show a modification of the separating chamber which provides for a minimum loss of small particles

0016936

through the exit channel and thence to the suction system.
It will be seen that the chamber 20' includes a plurality of
wall sections with the outlet channel 24' being connected to
a wall section which has a diameter less than the diameter
of the wall section to which the inlet channel 22' is
connected.  This provides, in effect, a stepped entry-exit
arrangement in which the inside upper surface of the step
indicated by reference number 26 guides the fish and the
small particles around the chamber until gravity overcomes any
slight upward vertical component of velocity that the fish or
particles may have on entry.  The following quantitative
improvements were measured for this embodiment taking values
recorded for the central outlet arrangement (FIGS. 1 and 2)
as basis at 100%:

        Reduction in average air velocity within
        receiver - 80%;
        Reduction in small particle carry-over
        to fan - 97%;
        Reduction in pressure loss through receiver - 89%.

Additionally an improvement in pneumatic conveying
efficiency as represented by a reduction in power required in
the suction system has been measured as about 19%.

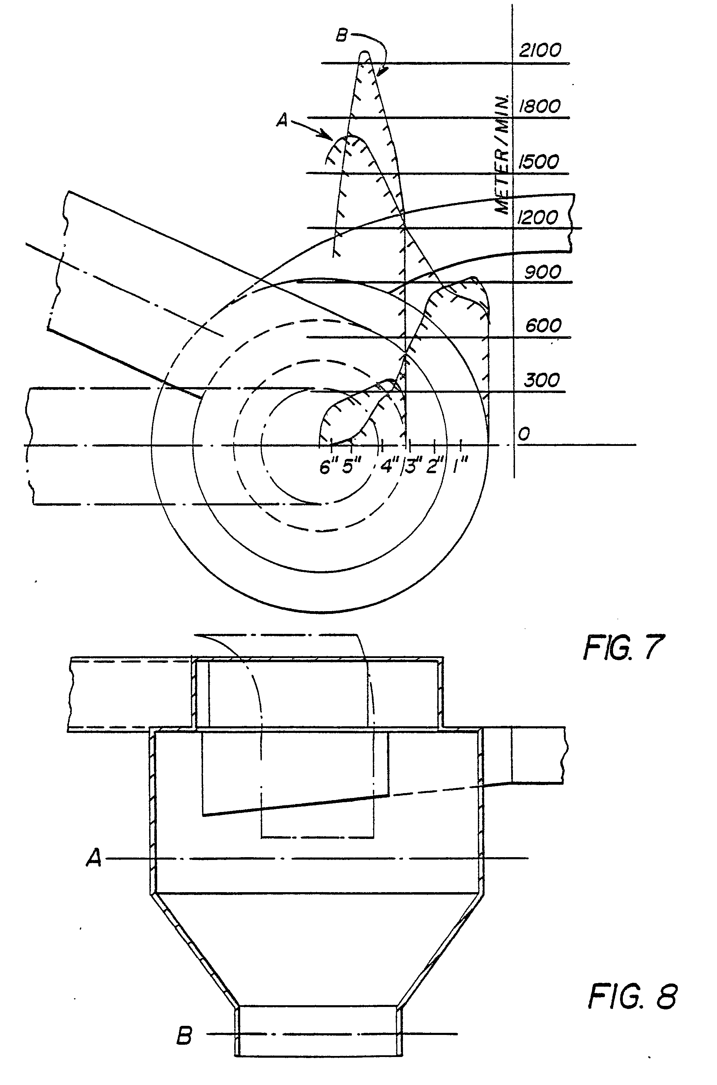

The reduction in air velocities made possible by
virtue of the invention is further illustrated with
reference to FIGS. 7  and  8.  A series of measurements
were taken out on two different forms of separator chambers,
one being a chamber employing a tangential inlet and a top
central outlet and vortex finder and the other being
a separator chamber having the same overall dimensions
as for the first case but wherein the vortex finder and
top central outlet were eliminated and a tangential outlet
channel substituted therefor.  With reference to FIGS. 7
and 8,  a separation chamber in accordance with the
present invention is illustrated in full lines with the
alternative form of chamber in accordance with the prior
art and employing a central outlet and vortex
finder being shown in phantom lines. With reference to FIG. 8, air velocities for these two forms of separating chamber were measured at two different levels as indicated by reference planes A and B. The same air flow in cubic feet per minute was maintained in each form of separator chamber on which measurements were taken out.

With reference to FIG. 7, graphs of the air velocities for the two forms of separating chamber were plotted and it will be seen that the graph of the velocity profile for plane B in the chamber employing a central air extraction shows air velocities in excess of 2100 metres per minute. For this same form of vortex chamber the graph of the velocity profile in plane A shows a maximum air velocity in excess of 1600 metres per minute. In contrast to these relatively high velocities, the graph of the velocity profile taken in plane B for the chamber having tangential air extraction shows a maximum velocity of only about 360 metres per minute while for the same chamber at plane A the maximum air velocity observed was only slightly in excess of 900 metres per minute.

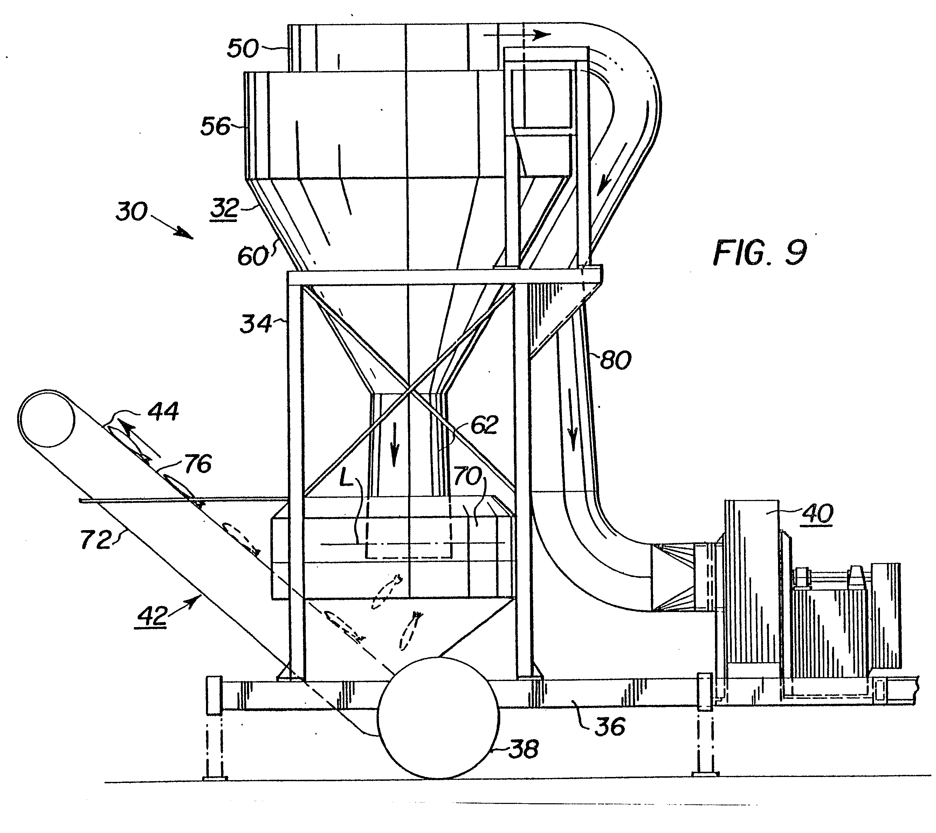

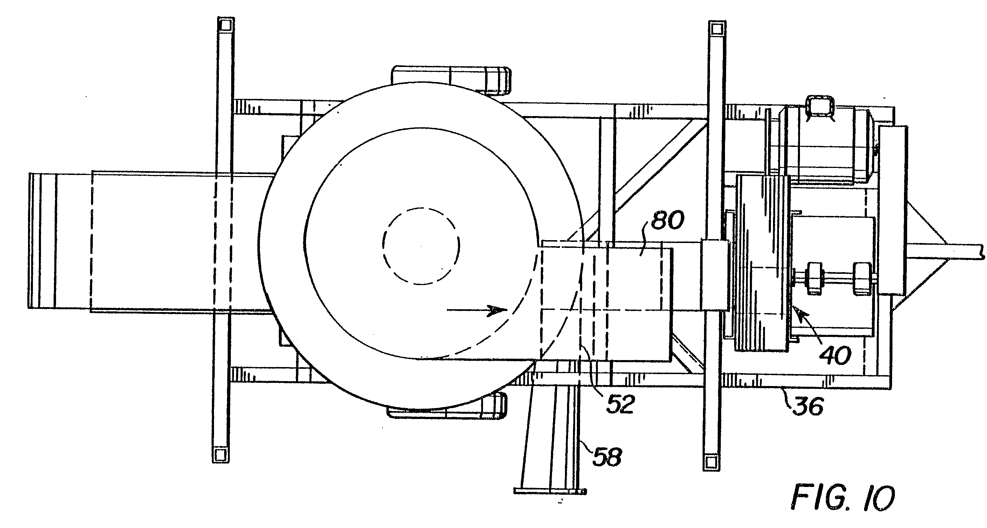

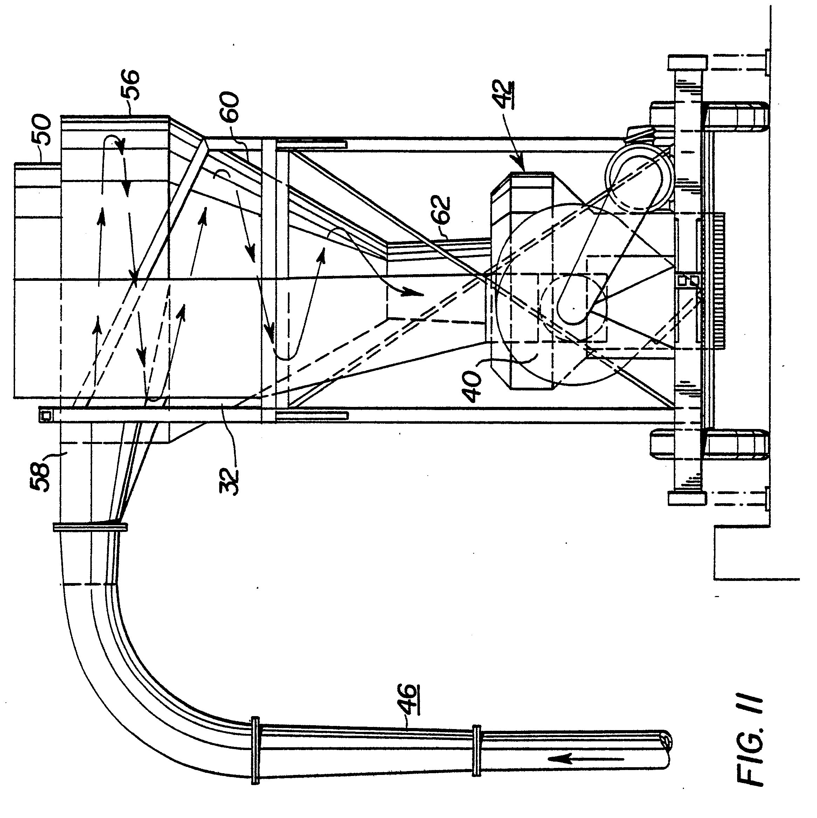

With reference now to FIGS. 9 - 11 there is shown apparatus for conveying and handling fish in accordance with the present invention. The apparatus 30 includes a separating chamber 32 which is mounted on a support frame 34, the latter, in turn, being mounted to a trailer arrangement 36 having wheels 38 thereon which enable the entire apparatus to be transported from one location to another in a convenient manner. The trailer arrangement 36 serves to mount a suction fan and motor assembly 40 as well as a water trap assembly 42, the latter being disposed below the separator chamber 32 and the water trap 42 having a discharge conveyor assembly 44 associated with same.

An elongated inlet duct 46 is connected to separator chamber 32, the inlet duct 46 being of sufficient length as to extend into, for example, the hold of a ship from which fish are to be unloaded. In order that the inlet duct 46 may be readily moved by operating personnel, it may be made flexible or alternatively it may be made in telescoping fashion so as to accommodate for different sizes and widths of ships, varying depths of fish in the hold and to accommodate for the rise and fall of the ship as well as roll of the ship while the latter is at the dock side.

The separator chamber 32 includes a series of sections, i.e. an upper section 50 to which a tangentially arranged outlet channel 52 is connected, an intermediate section 56 of larger diameter than section 50 to which the tangentially disposed inlet channel 58 is connected and a conical lower portion 60 which decreases in cross-sectional size in the downward direction. The interior of chamber 32 is, of course, of circular cross-section and it is smoothly finished so as to avoid abrasion and damage to fish which spiral therearound during operation of the apparatus. Connected to the lower end of conical section 60 of the chamber is a downwardly extending throat portion 62 also of circular cross-section but which diverges outwardly, i.e. increases in diameter slightly in the downward direction. It has been found that this diverging arrangement helps to reduce blockages caused by build-ups of any ice on the surface of the liquid trap which is carried through into the chamber 32 along with the fish. The length of the tubular throat section is designed to ensure that buoyant solids and ice are pushed through the discharge outlet by the mass of dry solids accumulating at the surface level of the water when operating at maximum vacuum, i.e. minimum absolute pressure. The space between the water surface in the tubular throat section and the connection of the conical wall section of the chamber should accommodate the required mass of dry solids for this purpose. Blockage by bridging or jamming of the product in the lower conical wall section is thus obviated.

0016936

The water trap assembly 42 comprises a tank 70 for containing therein a body of water, with the lower end of throat portion 62 being disposed within and having its lower end positioned below the level of the water in the trap during operation.  The approximate water level in the trap assembly 42 during operation is given by the letter L.  The water trap assembly is provided with an inclined wall section 72 and the previously described discharge conveyor 44 is disposed in close relation to this inclined wall portion 72. Discharge conveyor 44 comprises a conveyor belt 76 trained about upper and lower rolls which are driven by a suitable motor and gear reduction unit (not shown).  During operation, fish passing downwardly through throat portion 62 pass into the tank 70 and thence gradually settle onto the upper surface of the conveyor belt 76 and are carried thereby outwardly of the water trap arrangement 42 and onto a suitable receiving container (not shown).

The tangential air outlet 52 from chamber 32 is connected to the inlet of suction fan 40 by way of duct 80, the latter being sized and contoured such as to reduce pressure losses to a reasonable degree.  The suction fan 40 may be of any suitable commercial variety; it should be capable of maintaining an air pressure below atmospheric level by an amount approximating 20 inches or more of water.

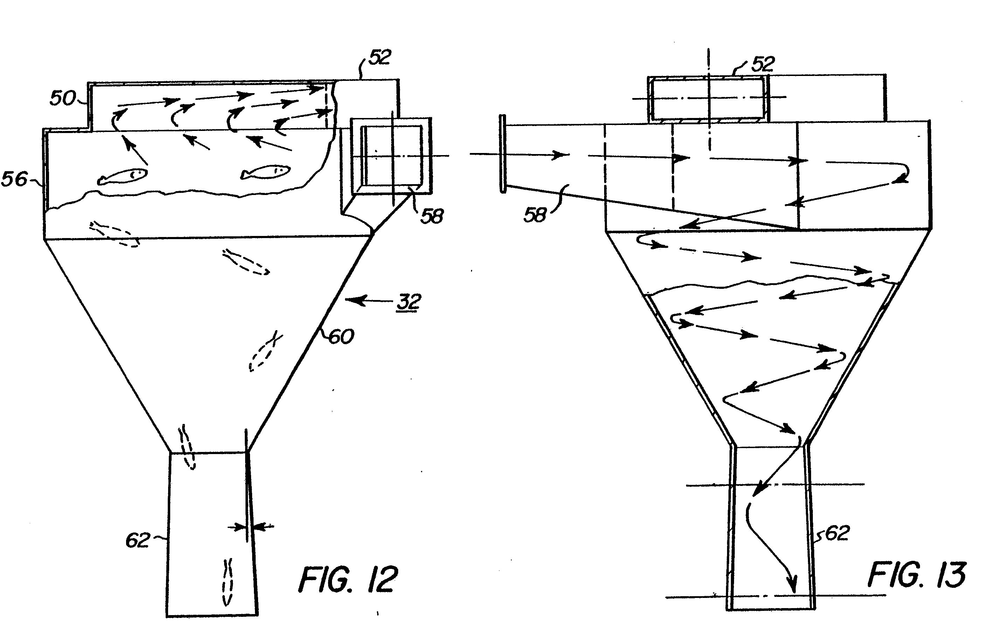

The separator chamber 32 is shown in further detail in Figures 12 - 14. The approximate air flow patterns within the chamber are illustrated by the arrows in Figure 12 while the downwardly spirally path of the fish is shown by the arrows in Figure 13.

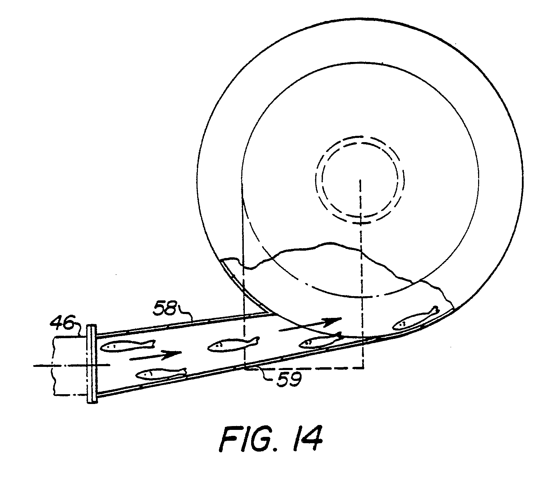

With reference to Figure 14, it will be noted that the tangentially disposed inlet channel 58 is arranged to impart a degree of radial velocity to the fish relative to the vertical axis of the chamber 32 before such articles actually enter into the chamber thereby to lessen the shock of contact between the fish and the interior of the chamber. As shown in FIG. 14, the center line of the inlet duct 46 immediately adjacent to the inlet channel 58 is laterally offset in such a manner that it is tangential to a diameter somewhat greater than the actual diameter of chamber 32. The outer vertical wall 59 of the entrance channel 58 is disposed at a small angle, e.g. about 8° to the center line of duct 46. By virtue of this, the outer wall 59 of the inlet channel 58 presents a sliding surface against which the incoming fish can come in contact thus imparting to such fish a component of velocity directed generally toward the central portion of the chamber 32. The reason for this somewhat modified form of tangential inlet is that impact on the interior of the chamber wall directly opposite a straight tangential entry can be a source of damage to the fish and this is reduced by the use of the modified tangential inlet channel 58 just described.

While the apparatus described above constitutes a preferred form of the invention, it is to be understood that the apparatus is capable of mechanical alteration without departing from the spirit of the invention as set forth in the claims appended hereto.

CLAIMS

1. Apparatus for conveying and handling delicate articles such as fish, including:

an elongated inlet duct adapted to extend into an article storage region, such as the hold of a ship;

suction producing means for producing a flow of air through the elongated inlet duct at a velocity sufficient to entrain said articles in the air flow and to carry same through the inlet duct;

separating means interposed between the suction producing means and the inlet duct for receiving articles passing through the inlet duct and separating the articles from the flow of air;

the separating means including a hollow chamber of generally circular cross-section defining a generally upright axis of symmetry, said chamber having an air inlet channel connected to the inlet duct and an air outlet channel connected to the suction producing means, whereby the latter, in operation, maintains a sub-atmospheric pressure in said chamber;

the improvement wherein both said inlet channel and said outlet channel are generally tangentially disposed with respect to the circumference of the chamber so that air entering said chamber via said inlet channel moves in a rotational pattern around the chamber axis and thence outwardly of said outlet channel without reversing its direction of rotation and with articles entrained in the entering flow being guided around the chamber axis by the interior of the chamber and moving downwardly within said chamber in a spiral path under the influence of gravitational forces thereon.

2. Apparatus according to claim 1 wherein said outlet channel is disposed at a level above the level of the inlet channel.

3. Apparatus according to claim 2 wherein said chamber is defined by a plurality of wall sections;

said outlet channel being connected to a wall section which has a diameter less than the diameter of a wall section to which the inlet channel is connected whereby to substantially reduce carry-over of solids from the inlet channel to the outlet channel.

4. Apparatus according to claim 1, 2 or 3 wherein said chamber includes a conical wall section in a lower portion thereof, the diameter of the conical section decreasing in the downward direction, and the lower end of the chamber defining an exit way for said articles and having a liquid trap arrangement associated therewith to allow the articles to exit the chamber while preventing entry of air into said chamber via said trap.

5. Apparatus according to claim 1, 2 or 3 wherein said chamber includes a conical wall section in a lower portion thereof, the diameter of the conical section decreasing in the downward direction, and the lower end of the chamber defining an exit way for said articles and having a liquid trap arrangement associated therewith to allow the articles to exit the chamber while preventing entry of air into said chamber via said trap, said trap including a water tank and a belt conveyor disposed therein upon the upper surface of which said articles settle after exiting from the lower end of the chamber, the belt conveyor being adapted to carry said articles upwardly out of the water tank.

6. Apparatus according to claim 1, 2 or 3 wherein said chamber includes a conical wall section in a lower portion thereof, the diameter of the conical section decreasing in the downward direction, and the lower end of the chamber defining an exit way for said articles and having a liquid trap arrangement associated therewith to allow the articles to exit the chamber while preventing entry of air into said chamber via said trap, and wherein said exit way for said articles includes a tubular throat section disposed below said conical wall section and arranged to be disposed in the liquid of the liquid trap, said tubular throat section being shallowly flared outwardly in the downward direction to reduce blockages caused by build-ups of any ice which is carried through into the chamber along with the articles.

7. Apparatus according to claim 1, 2 or 3 wherein said generally tangentially disposed inlet channel includes a surface portion arranged to impart a degree of radial velocity to the articles relative to the axis of the chamber before said articles enter into the chamber to lessen the shock of contact between said articles and the interior of the chamber after entry.

8. Apparatus according to claim 1, 2 or 3 wherein said chamber includes a conical wall section in a lower portion thereof, the diameter of the conical section decreasing in the downward direction, and the lower end of the chamber defining an exit way for said articles and having a liquid trap arrangement associated therewith to allow the articles to exit the chamber while preventing entry of air into said chamber via said trap, and wherein said exit way for said articles includes a tubular throat section disposed below said conical wall section and arranged to be disposed in the liquid of the liquid trap, said tubular throat section being shallowly flared outwardly in the downward direction to reduce blockages caused by build-ups of any ice which is carried through into the chamber along with the articles, the length of the tubular throat section being selected to ensure that any buoyant solids and ice are pushed down through a lower exit end of the throat section by any mass of solids, including said articles, accumulating at the surface of the liquid standing within said throat section under conditions of maximum sub-atmospheric pressure, i.e. minimum absolute pressure.

FIG. 1

FIG. 2

FIG. 3

FIG. 4

FIG. 5

FIG. 6

0016936

*FIG. 7*

*FIG. 8*

FIG. 9

0016936

80

40

36

52

58

*FIG. 10*

FIG. II

FIG. 12

FIG. 13

FIG. 14

## DOCUMENTS CONSIDERED TO BE RELEVANT

| Category | Citation of document with indication, where appropriate, of relevant passages | Relevant to claim |
|---|---|---|
| D | <u>CA - A - 867 649</u> (ATLANTIC BRIDGE CO.)<br>* page 1, line 1 to page 4, line 1 *<br>& GB - A - 1 204 629<br>-- | 1 |
| | <u>GB - A - 965 988</u> (SULZER FRERES)<br>* page 1, lines 9 to 42 *<br>-- | 1,2 |
| D | <u>CA - A - 756 474</u> (MERRICK)<br>* fig. 3 *<br>& US - A - 3 226 164<br>-- | 1 |
| A | <u>FR - A - 1 318 892</u> (MOTOR-CONDEN-SATOR-COMPAGNIE SCHLOZ)<br>-- | |
| A | <u>FR - A - 1 040 388</u> (AIR CONTROL INSTALLATIONS)<br>---- | |

**CLASSIFICATION OF THE APPLICATION (Int. Cl.3)**

B 65 G 53/60

**TECHNICAL FIELDS SEARCHED (Int.Cl.3)**

B 04 C 5/00
B 63 B 27/00
B 65 G 53/00
B 65 G 67/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |

| Place of search | Date of completion of the search | Examiner |
|---|---|---|
| Berlin | 02-07-1980 | SIMON |

EPO Form 1503.1 06.78